# EUROPÄISCHE PATENTSCHRIFT

(11) **EP 0 505 798 B1**
(45) Veröffentlichungstag und Bekanntmachung des Hinweises auf die Patenterteilung: **12.06.1996**
(21) Anmeldenummer: 92103938.4
(22) Anmeldetag: 07.03.1992
(51) Int. Cl.: C08F 279/04

(54) **Verfahren zur Herstellung von ABS-Formmassen**
Process for the preparation of ABS molding compositions
Procédé de préparation de masses à mouler d'ABS

(30) Priorität: 27.03.1991 DE 4110009
(43) Veröffentlichungstag der Anmeldung: 30.09.1992
(73) Patentinhaber: BASF Aktiengesellschaft, D-67063 Ludwigshafen (DE)
(72) Erfinder: Baumgartner, Ehrenfried, Dr., W-6701 Roedersheim-Gronau (DE); Gausepohl, Hermann, Dr., W-6704 Mutterstadt (DE); Jung, Rudolf H., Dr., W-6520 Worms 1 (DE)

(56) Entgegenhaltungen:
- WO-A-91/02008
- DE-A- 1 745 767
- US-A- 4 252 911

## Beschreibung

Die Erfindung betrifft ein fortlaufend (kontinuierlich zu betreibendes) verfahren zur Herstellung von schlagzähem Polystyrolacrylnitril (ABS), dessen dispergierte Kautschukpartikel Durchmesser von weniger als 500 nm aufweisen, in Masse- bzw. Lösungspolymerisation in zwei oder mehr Reaktionszonen, wobei eine erste Zone als Rührkessel betrieben wird, unter Anwendung eines Radikalinititors und gegebenenfalls eines Kettenüberträgers (Reglers).

Auf kontinuierliche Verfahren zur Herstellung von schlagzähem ggf. acrylnitrilmodifiziertem Polystyrol beziehen sich beispielsweise die folgenden Druckschriften:
(1) US-A-3 243 481 (6) EP-A-54 141
(2) US-A-3 903 202 (7) JP-A-63 199 717
(3) DE-A-2 448 596 (8) JP-A-63 207 804
(4) EP-A-67 536 (9) JP-A-63 207 803
(5) US-A-4 410 659 (10) JP-A-54 070 350.

Danach ist die kontinuierliche Herstellung von ABS-Polymerisaten, insbesondere in zwei oder mehr Reaktionszonen aus (1) und (2) bekannt. Sie wird im Temperaturbereich von 80 bis 180°C ausgeführt; in einer anschließenden sog. Entgasung (Entfernung des Lösungsmittels bzw. der Monomerreste) werden auch höhere Temperaturen angewendet.

Ein anderes Verfahren zur Herstellung von ABS-Polymerisaten ist die Emulsionspolymerisation; auf diese wir hier nicht näher eingegangen.

Die mechanischen Eigenschaften der in Masse oder Lösung polymerisierten und der in Emulsion hergestellten ABS-Formmassen gleichen sich weitgehend. Vorteile bei der Masse- oder Lösungspolymerisaten sind vor allem die niedrigeren Herstellkosten (u.a. höhere Kautschukeffektivität, kein Abwasser) und die hellere, weniger Pigmente zur Einfärbung verbrauchende Eigenfarbe der Produkte. Nachteilig ist aber im Vergleich zum Ergebnis der Emulsionspolymerisation ein geringerer Oberflächenglanz, weil das in Masse oder Lösung polymerisierte ABS verhältnismäßig große dispergierte Kautschukpartikel besitzt. Es hat daher eine Reihe von Versuchen gegeben, diesen Mangel durch entsprechende Verfahrensänderungen auszugleichen und ABS in Masse- oder Lösungspolymerisation so herzustellen, daß kleine Kautschukpartikel erhalten werden.

In (3) ist eine Masse-Suspensionspolymerisation für ein ABS-Polymerisat zur Herstellung von Mischungen mit Polyestern beschrieben. Für den ABS-Bestandteil sollen Teilchengrößen von 500 bis 2000 nm erzielt werden. Durch Anwendung hoher Initiatorkonzentrationen (vgl. Beispiel 1), erhält man Kautschukpartikel mit einem Durchmesser von weniger als 1000 nm. Abgesehen davon, daß auch solche ABS-Produkte nicht mit den in Emulsion hergestellten Formmassen vergleichbar sind (diese haben z.B. Kautschukpartikeldurchmesser von unter 500 nm), läßt sich dieses Verfahren nicht auf eine kontinuierliche Lösungspolymerisation anwenden, da die hohe Reaktionsgeschwindigkeit bei höherem Umsatz zu Anbackungen in den Reaktoren führt.

In (4) wird ein Lösungspolymerisationsverfahren beschrieben, das ABS-Produkte mit einem Kautschukpartikeldurchmesser von 200 bis 500 nm liefert, wenn ein Kautschuk mit einem sehr geringen Molekulargewicht eingesetzt und der Kautschuk durch Zugabe von weiterem Acrylnitril zur ersten Reaktionszone gefällt wird. Die Zähigkeit solcher ABS-Produkte ist sehr schlecht, da die entstehenden Kautschukpartikel kaum mit Hartmatrix gefüllt sind. Die Kautschukeffektivität ist entsprechend schlecht und es müßten große Mengen des relativ teuren (weil anionisch polymerisierten) Polybutadienkautschuks eingesetzt werden, um genügend hohe Schlagzähigkeit zu erreichen.

In (5) wird eine kontinuierliche Masse-Polymerisation in einem Extruder unter Einsatz großer Mengen Acrylnitril beschrieben, die ABS-Produkte mit einem Kautschukpartikeldurchmesser von 10 bis 500 nm liefert. Aufgrund des großen Überschusses an Acrylnitril wird der Kautschuk quasi gefällt; die entstehenden Kautschukpartikel besitzen keine Hartmatrixeinschlüsse, was zu den schon erwähnten Nachteilen führt. Außerdem ist eine Polymerisation in einem Extruder eine für die Großtechnik extrem teure Technologie.

Der Einsatz von Kautschuk mit extrem niedriger Lösungsviskosität (7) in einer Lösungspolymerisation ergibt immerhin Kautschukpartikel mit einem maximalen Durchmesser von 750 nm. Der Oberflächenglanz eines solchermaßen erzeugten ABS kann aber nicht mit einem in Emulsionspolymerisation erzeugten ABS konkurrieren, dafür sind die Kautschukpartikel zu groß. Aufgrund des geringen Molekulargewichts des Kautschuks sind die erhaltenen Kautschukpartikel schlecht mit Hartmatrix gefüllt, was zu den bereits geschilderten Nachteilen führt.

Als Schlagzähmodifier für ABS wird in (6) ein "kautschukartiges Polymerisat" mit geringer Lösungsviksosität verwandt. In den Beispielen ist das "kautschukartige Polymerisat" als Styrol-Butadienblockcopolymerisat beschrieben. Es werden durchschnittlich Kautschukpartikelgrößen von 500 bis 600 nm erhalten. In (8) bis (10) wird ebenfalls der Einsatz von Blockkautschuk zur Herstellung von ABS mit kleinen Kautschukpartikeln beschrieben. Von Nachteil ist aber der hohe Preis des Blockkautschuks, die den Kostenvorteil des Masse- oder Lösungspolymerisationsverfahren wieder zunichte machen.

Aufgabe war es daher, ein Verfahren zu finden, das unter Verwendung von Polybutadien auch in kontinuierlichem Masse- oder Lösungspolymerisationsverfahren zu einem ABS mit kleinen Kautschukpartikeln, d.h. solchen mit einem Durchmesser von weniger als 500 nm führt.

Die Lösung dieser Aufgabe gelingt durch Aufteilung der Umsetzung in ein im Prinzip absatzweises, in einem Rührkessel, d.h. unter Rückvermischung betriebenes Anpolymerisieren und eine Nachpolymerisation in einem Rohrreaktor. Das erfindungsgemäße Verfahren wird somit in mindestens zwei Reaktionszonen und im übrigen im wesentlichen isotherm durchgeführt. Im Unterschied zu den bekannten Verfahren werden jedoch die Vorteile einer diskontinuierlichen Polymerisation mit denen einer kontinuierlichen Polymerisation kombiniert, indem in der ersten Reaktionszone absatzweise bis zu einem Feststoffgehalt polymerisiert wird, bei dem die sog. Phaseninversion mit Sicherheit abgeschlossen ist und in einer zweiten oder weiteren Reaktionszone die Polymerisation zu Ende geführt, d.h. bis zu einem Feststoffgehalt von wenigstens 50 %, bevorzugt aber 70 % fortgesetzt wird. Auf den vollständigen Verbrauch der Monomeren kommt es dabei nicht an.

Damit die Polymerisation und die Aufarbeitung insgesamt kontinuierlich betrieben werden kann, wird erfindungsgemäß die Polymerisation in der ersten Reaktionszone in mindestens zwei wechselweise betriebenen Rührkesseln vorgenommen und der jeweils vorpolymerisierte Kesselinhalt fortlaufend einem Rohrreaktor zugeführt.

Aus Gründen der Klarheit und Einfachheit wird im folgenden i. a. von Styrol, Acrylnitril und Polybutadien gesprochen, auch wenn deren Äquivalente gemeint sind; die Erfindung ist insoweit nicht beschränkt.

Unmittelbarer Erfindungsgegenstand ist daher ein Verfahren zur fortlaufenden (kontinuierlichen) Herstellung von schlagzähem Polystyrol (ABS) durch radikalisch ausgelöste Polymerisation von monomerem Styrol und Acrylnitril oder deren Äquivalenten in Gegenwart von vorgebildetem, gelöstem Polybutadien als Pfropfgrundlage, wobei als Lösungsmittel insbesondere Ethylbenzol und wenigstens zeitweise die Monomeren dienen und beim Erreichen eines bestimmten Verfahrensfortschritts Phaseninversion stattfindet, in zwei oder mehr Reaktionszonen, wobei die erste Reaktionszone mindestens doppelt vorhanden und jeweils als Rührkessel ausgebildet ist und wobei ein Rührkessel abwechselnd mit dem (oder den) anderen derart betrieben wird, daß das Reaktionsgemisch bis zur abgeschlossenen Phaseninversion bzw. dem Verbrauch des Starters polymerisiert und der jeweilige Kesselinhalt danach fortlaufend einer als Rohrreaktor ausgebildeten weiteren Reaktionszone zugeführt wird.

Für das Verfahren kommen als Monomere Styrol und Acrylnitril im Verhältnis von 90/10 bis 60/40 in Frage. Äquivalente Monomere wie α-Methylstyrol, o-, m-, p-Methylstyrol, tert.-Butylstyrol bzw. Methacrylnitril können in bekannter Weise anstelle oder zusammen mit Styrol bzw. Acrylnitril verwendet werden.

Als Kautschuk ist Polybutadien vom Medium- oder High-cis-Typ mit einem Molekulargewicht von 70 000 bis 350 000 (Gewichtsmittel) besonders geeignet. Grundsätzlich ist das Verfahren aber auch auf Blockkautschuke z.B. vom Styrol-Butadientyp anwendbar. Der Kautschuk wird in einer Menge von vorzugsweise 3 bis 30 Gew.-%, bezogen auf die Monomeren, eingesetzt.

Geeignete Radikalinitiatoren sind pfropfaktive Peroxide. Besonders bevorzugt sind Dibenzoylperoxid, tert.-Butylperoctoat, tert.-Butylperbenzoat, tert.-Butylperpivalat und tert.-Butylperneodecanoat. Der Initiator wird in einer Menge von 0,01 bis 0,5 Gew.-%, bezogen auf die Monomeren, angewendet, wobei die Mengen jeweils so bemessen werden, daß - unter Berücksichtigung von Temperatur und Zerfallsparametern - die Polymerisation auf jeder Stufe bis zum praktische vollständigen Verbrauch des Initiators abläuft.

Als Kettenüberträger (Regler) kommen die üblicherweise verwendeten Mercaptane mit 4 bis 18 C-Atomen in Betracht. Es haben sich besonders das n-Butylmercaptan, das n-Octylmercaptan sowie das n- oder t.-Dodecylmercaptan bewährt. Die Menge an Mercaptan, falls angewendet, beträgt in der Regel 0,01 bis 0,3 Gew.-%, bezogen auf die Monomeren.

Als Lösungsmittel eignen sich Toluol, Xylol, Methylethylketon oder Tetrahydrofuran und insbesondere Ethylbenzol. Die genannten Lösungsmittel werden in Mengen von 2 bis 25 Gew.-%, bezogen auf Monomere angewendet.

Die Polymerisation in der ersten Stufe (dem Rührkessel) wird erfindungsgemäß bis zur Phaseninversion durchgeführt, wobei eine Temperatur von 90°C nicht überschritten werden soll. Bevorzugt beträgt die Temperatur - je nach verwendetem Härter - i.a. 60 bis 90°C, bei einer Verweilzeit (ohne Entleerungsphase) von etwa 0,5 bis 10, insbesondere 1 bis 5 Stunden. Die Entleerungszeit richtet sich nach der Dimensionierung der nachfolgenden Rohrreaktoren; sie soll dort eine Verweilzeit von jeweils etwa 1 bis 5 Stunden, d.h. bei Verwendung von zwei oder mehr Rohrreaktoren insgesamt etwa 2 bis 10 Stunden erlauben. Die Initiatormenge, die den Rührkesseln nach und nach zugegeben wird, beträgt i.a. 0,01 bis 0,5 Gew.-%, bezogen auf die Monomerenmenge.

Nach dem Verlassen des Rührkessels, d.h. im Verlauf der Umsetzung im Rohrreaktor wird i.a. kein Initiator mehr zugegeben, jedoch ist die Erfindung insoweit nicht beschränkt.

Während der Umsetzung im Rohrreaktor wird hingegen i.a. ein Regler benötigt; seine Menge liegt je nach der benutzten Art bei 0,01 bis 0,5 Gew.-%, bezogen auf die ursprüngliche Monomerenmenge.

Während der Polymerisation, insbesondere nach Herstellung der Lösung des Kautschuks oder vor der Verarbeitung der nach dem erfindungsgemäßen Verfahren erhaltenen schlagfesten Polymerisate können übliche Zusatzstoffe, wie innere Gleitmittel, Antioxidantien oder UV-Stabilisatoren, sowie Schmiermittel, Füllstoffe u. dgl. dem Reaktionsansatz in üblichen, dem Fachmann bekannten Mengen, zugesetzt werden.

Der Vorteil des erfindungsgemäßen Verfahrens besteht darin, daß ein hoher Pfropfgrad des Kautschuks und eine hohe Pfropfausbeute erzielt werden, ohne daß es zu Schwierigkeiten in der Wärmeabfuhr, zu Kesselanwachsungen oder zu vorzeitigen Vernetzungen kommt. Ein weiterer Vorteil besteht darin, daß sich gezielt mit ein und demselben Kautschuk je nach Reaktionsführung Produkte mit hoher Schlagzähigkeit oder mit guter Transluzenz herstellen lassen.

Nach dem erfindungsgemäßen Verfahren können schlagzähe ABS-Polymerisate mit Teilchengrößen eines Durchmessers von unter 500 nm erhalten werden.

Die nach dem erfindungsgemäßen Verfahren erhaltenen Formmassen können in üblicher Weise thermoplastisch verarbeitet werden, also z.B. durch Extrudieren, Spritzgießen, Kalandrieren, Hohlkörperblasen, Pressen oder Sintern; bevorzugt werden durch Spritzgießen Formteile hergestellt.

Die in den nachstehenden Beispielen und Vergleichsversuchen verwendeten stofflichen Kennwerte wurden wie folgt bestimmt:
- Die Lösungsviskosität, LV, des Kautschuks wird in einer 5 gew.-%igen Lösung in Styrol bei 25°C gemessen.
- Die mittlere Teilchengröße wird durch Auswertung elektronenmikroskopischer Aufnahmen ermittelt.
- Die Kerbschlagzähigkeit wird an bei 230°C spritzgegossenen Formkörpern nach DIN 53 453 gemessen.

Die angegebenen Mengen beziehen sich im allgemeinen auf das Gewicht.

### Beispiel 1

Eine geeignete Polymerisationsanlage besteht aus folgenden Bauteilen:
a) ein 250 l Kautschuklösebehälter mit Ankerrührer,
b) ein 250 l Vorratsbehälter mit Ankerrührer,
c) zwei 50 l Rührkessel mit Ankerrührer, Siedekühler und außenliegender Wandkühlung
d) zwei in Reihe geschaltete 30 l Turmreaktoren (= 1100 mm lang und 220 mm weit) mit innenliegenden, horizontal geführten parallelen Ebenen von Kühlrohren und einem jeweils zwischen die Kühlrohre greifender Rührer,
e) durch Schwerkraft beschickte Zahnradpumpen
f) eine übliche Entgasungseinheit
g) sowie eine Granuliervorrichtung.

18 kg handelsübliches Polybutadien (Buna® HX von Bayer AG mit einer Lösungsviskosität von 90 mPas als 5 %ige Lösung in Styrol bei 25°C) werden in 22,5 kg Ethylbenzol, 82,13 kg Styrol und 27,37 kg Acrylnitril gelöst und in einen Vorratsbehälter gepumpt, aus dem die Polymerisationsanlage versorgt wird. Jeweils 40 l Kautschuklösung werden zunächst in einen der beiden Rührkessel gepumpt und unter Rühren auf 80°C erwärmt. Es werden innerhalb einer Stunde 16 g handelsübliches tert.-Butylperneodecanoat als 10 %ige Lösung in Etholbenzol zugegeben, so daß innerhalb von 2 Stunden bei einer Rührgeschwindigkeit von 150 Umdrehungen pro Minute ein Feststoffgehalt von 25 Gew.-% erreicht wird.

Da die Halbwertszeit des verwendeten Starters bei 80°C 8,6 Minuten beträgt, ist aufgrund der "dead end"-Polymerisationsbedingungen (A.V. Tobolsky J. Am. Chem. Soc. 80, 5927-29 (1958) und 82, 1277-80 (1960)) die Umsetzung nach 2 Stunden weitgehend beendet. Die Polymerlösung bzw. -dispersion wird nun mit einer Geschwindigkeit von 12 l/h in den ersten Polymerisationsturm (d.h. Rohrreaktor) gefördert. Während so der erste Rührkessel geleert wird, wird der zweite Rührkessel beschickt und verfahren, bis wiederum 25 Gew.-% Feststoffgehalt erreicht sind und die Inversion stattgefunden hat. Dies wird abwechselnd mit beiden Rührkesseln bis zum Verbrauch der Vorräte fortgesetzt.

Im ersten Turm wird bei 130°C ein Feststoffgehalt an Polymerisat von ca. 45 Gew.-% erreicht. Im zweiten, nachgeschalteten Turm wird bei 146°C ein Feststoffgehalt von 70 Gew.-% erreicht. Beide Türme werden vollständig gefüllt betrieben. Kontinuierliche Zugabe von tert.-Dodecylmercaptan in den ersten Polymerisationsturm regelt das Molekulargewicht des ABS auf praxisübliche Werte, so daß eine Fließfähigkeit nach DIN 53 735 bei 220°C/10 kp von ca. 5 cm³/10 min. erreicht werden.

Im Anschluß an den zweiten Turm wird die Polymerschmelze entgast und schließlich granuliert. Der Durchsatz bezogen auf die lösungsmittelfreie Formmasse an ABS-Formmasse beträgt 8,4 kg/h.

Die maximale Teilchengröße des Kautschukanteils betrug 400 nm. Die Kerbschlagzähigkeit a_{K} der Formmasse bei 23°C und -40°C erreichte folgende Werte:

| | | |
|---|---|---|
| a_{K} | (23°C) | 11 kJ/m² |
| a_{K} | (-40°C) | 6 kJ/m² |

### Beispiele 2 und 3

Der Versuch gemäß Beispiel 1 wurden mit handelsüblichem Polybutadien des Typs Buna HX 529 C und Buna HX 565 anstelle von Buna HX 500 wiederholt. Es wurden ABS-Formmassen mit folgenden Eigenschaften erhalten.

| Kautschuk | Lösungsviskosität des Kautschuks [mPa·s] | Maximale Kautschukteilchengröße der ABS-Formmase [nm] | Kerbschlagzähigkeit bei | |
|---|---|---|---|---|
| | | | 23°C [kJ/m²] | -40°C [kJ/m²] |
| Buna HX 529 C | 170 | 500 | 12 | 7 |
| Buna HX 565 | 42 | 300 | 9 | 5 |

### Beispiel 4 und 5

Es wurde wie in Beispiel 1 verfahren, anstelle einer Temperatur von 80°C in der ersten Reaktionszone wurden Polymerisationstemperaturen von 70 bzw. 90°C eingestellt. Es wurden ABS-Formmassen mit folgenden Eigenschaften erhalten:

| Polymerisationstemperatur in der 1. Reaktionszone | Maximale Kautschukteilchengröße der ABS-Formmasse [nm] | Kerbschlagzähigkeit bei | |
|---|---|---|---|
| | | 23°C [kJ/m²] | -40°C [kJ/m²] |
| 70 | 0,4 | 11 | 6 |
| 90 | 0,4 | 10,6 | 5,3 |

Vergleich mit Beispiel 1 zeigt, daß die Eigenschaften der Formmasse von der Polymerisationstemperatur in der ersten Zone nur wenig beeinflußt werden.

### Vergleichsversuch 4

Es wurden die Eigenschaften eines in Emulsionspolymerisation hergestellten ABS mit 17 Gew.-% Polybutadien zu Vergleichszwecken untersucht.

Hierzu wurde durch Polymerisation von 62 Teilen Butadien in Gegenwart einer Lösung von 0,6 Teilen tert.-Dodecylmercaptan, 0,7 Teilen C₁₄-Na-Alkylsulfonat, 0,2 Teilen Kaliumperoxodisulfat und 0,2 Teilen Natriumpyrophosphat in 80 Teilen Wasser bei 25°C ein Polybutadienlatex hergestellt. Nach Ende der Reaktion wurde ein Umsatz von 99 % erreicht und ein Polybutadienlatex erhalten, dessen mittlere Kautschukpartikelgröße, bei 100 nm lag. Der Latex wurde durch Zusatz von 25 Teilen einer Emulsion eines Copolymeren aus 96 Teilen Ethylacrylat und 4 Teilen Methacrylsäureamid mit einem Feststoffgehalt von 10 Gew.-Teilen agglomeriert, wobei ein Polybutadienlatex mit einer mittleren Teilchengröße von 300 nm entstand. Nach Zusatz von 40 Teilen Wasser, 0,4 Teilen Na-C₁₄-Alkylsulfonat und 0,2 Teilen Kaliumperoxodisulfat wurden 38 Teile einer Mischung aus Styrol und Acrylnitril im Verhältnis 70 : 30 innerhalb von 4 Stunden zugegeben und unter Rühren des Ansatzes bei 75°C polymerisiert. Der Umsatz, bezogen auf Styrol-Acrylnitril, war praktisch quantitativ. Die erhaltene Pfropfkautschukdispersion wurde mittels Calciumchloridlösung gefällt und das abgetrennte Pfropfmischpolymerisat mit destilliertem Wasser gewaschen. Der feuchte Pfropfkautschuk wurde auf einem Zweischneckenextruder unter Entgasung mit getrennt hergestelltem Polystyrolacrylnitril (VZ = 80,7 ml/g, AN-Gehalt = 25 Gew.-%) in solchem Verhältnis gemischt, daß die Formmasse 17 Gew.-% Polybutadien enthielt. Die Produkteigenschaften sind wie folgt:

| | | |
|---|---|---|
| E-Modul | [N/mm²] | 2650 |

| Kerbschlagzähigkeit | | |
|---|---|---|
| bei 23°C | [kg/mm²] | 11,0 |
| bei -40°C | [kg/mm²] | 4,0 |

| Oberflächenglanz | | |
|---|---|---|
| Bedingung 1 | [%] | 68,0 |
| Bedingung 2 | [%] | 47,0 |
| Kautschukpartikelgröße d₅₀ | [µm] | 0,3 |
| Yellownes Index | | 32,8 |
| Viskositätszahl der PSAN-Matrix | [ml/g] | 80,7 |

## Patentansprüche

1. Verfahren zur fortlaufenden (kontinuierlichen) Herstellung von schlagzähem Polystyrolacrylnitril (ABS) durch radikalisch ausgelöste Polymerisation von monomerem Styrol und Acrylnitril oder deren Äquivalenten in Gegenwart von vorgebildetem, gelöstem Polybutadien als Pfropfgrundlage, wobei als Lösungsmittel insbesondere Ethylbenzol und wenigstens zeitweise die Monomeren dienen und beim Erreichen eines bestimmten Verfahrensfortschritts Phaseninversion stattfindet, in zwei oder mehr Reaktionszonen, dadurch gekennzeichnet, daß die erste Reaktionszone mindestens doppelt vorhanden und jeweils als Rührkessel ausgebildet ist, wobei ein Rührkessel abwechselnd mit dem anderen absatzweise derart betrieben wird, daß das Reaktionsgemisch bis zur abgeschlossenen Phaseninversion bzw. dem Verbrauch des Starters polymerisiert und der jeweilige Kesselinhalt danach fortlaufend einer als Rohrreaktor ausgebildeten zweiten Reaktionszone zugeführt wird.

2. Verfahren nach Anspruch 1, dadurch gekennzeichnet, daß die Verweilzeit in der ersten Reaktionszone 0,5 bis 10 Stunden beträgt.

3. Verfahren nach Anspruch 1, dadurch gekennzeichnet, daß die Verweilzeit in der ersten Reaktionszone sich zu der in der zweiten und ggf. weiteren Reaktionszone wie 1 : 0,5 bis 1 : 5 verhält.

4. Verfahren nach Anspruch 1, dadurch gekennzeichnet, daß der Umsatz im Rührkessel bis zu einem Monomerverbrauch geführt wird, der dem Kautschukgewicht mindestens entspricht.

5. Verfahren nach Anspruch 1, dadurch gekennzeichnet, daß die Umsetzung im Rührkessel bei 90°C oder weniger durch eine tert.-Butylperoxiverbindung ausgelöst wird.

6. Verfahren nach Anspruch 1, dadurch gekennzeichnet, daß die Umsetzung im Rührkessel im wesentlichen ohne Reglerzusatz vorgenommen wird.

## Claims

1. A process for the continuous preparation of impact-resistant polystyrene acrylonitrile (ABS) by free radical polymerization of monomeric styrene and acrylonitrile or equivalents thereof in the presence of preformed, dissolved polybutadiene as a grafting base, the solvents used being in particular ethylbenzene and, at least from time to time, the monomers, and phase inversion taking place when the process has progressed to a certain point, in two or more reaction zones, wherein the first reaction zone is present at least in duplicate and is in the form of a stirred kettle in each case, one stirred kettle being operated batchwise and alternately with the other in such a way that the reaction mixture is polymerized until phase inversion is complete or the initiator has been consumed, and the particular kettle content is then fed continuously to a second reaction zone in the form of a tube reactor.

2. A process as claimed in claim 1, wherein the residence time in the first reaction zone is from 0.5 to 10 hours.

3. A process as claimed in claim 1, wherein the ratio of the residence time in the first reaction zone to that in the second or any further reaction zone is from 1 : 0.5 to 1 : 5.

4. A process as claimed in claim 1, wherein the conversion in the stirred kettle is carried out until the consumption of monomer corresponds at least to the weight of the rubber.

5. A process as claimed in claim 1, wherein the reaction in the stirred kettle is initiated at 90°C or less by a tert-butyl peroxy compound.

6. A process as claimed in claim 1, wherein the reaction in the stirred kettle is carried out essentially without the addition of a regulator.

## Revendications

1. Procédé pour la préparation en suivi (en continu) de polystyrène-acrylonitrile (ABS) résilient par polymérisation à déclenchement radicalaire de styrène monomère et d'acrylonitrile ou de leurs équivalents en présence de polybutadiène dissous préformé à titre de substrat de greffage, dans lequel font office de solvants, en particulier l'éthylbenzène et les monomères au moins par intermittence, et lorsqu'on atteint une progression opératoire déterminée, a lieu une inversion de phase, dans deux zones réactionnelles ou plus, caractérisé en ce que la première zone réactionnelle est présente au moins en double et est réalisée respectivement sous forme d'une cuve d'agitation, dans lequel on met en service en discontinu une cuve d'agitation alternativement avec l'autre de telle sorte que le mélange réactionnel polymérise jusqu'au terme de l'inversion de phase, respectivement jusqu'à la consommation de l'amorceur, et on achemine le contenu respectif de la cuve par la suite en continu à une seconde zone réactionnelle réalisée en forme de réacteur tubulaire.

2. Procédé selon la revendication 1, caractérisé en ce que le temps de séjour dans la première zone réactionnelle s'élève de 0,5 à 10 heures.

3. Procédé selon la revendication 1, caractérisé en ce que le temps de séjour dans la première zone réactionnelle se situe par rapport à celui dans la deuxième et éventuellement dans les autres zones réactionnelles dans la proportion de 1:0,5 à 1:5.

4. Procédé selon la revendication 1, caractérisé en ce qu'on guide la conversion dans la cuve d'agitation jusqu'à ce que l'on obtienne une consommation des monomères, qui correspond au moins au poids du caoutchouc.

5. Procédé selon la revendication 1, caractérisé en ce qu'on déclenche la mise en réaction dans la cuve d'agitation à 90°C ou à une température inférieure à l'aide d'un composé peroxy de tert.-butyle.

6. Procédé selon la revendication 1, caractérisé en ce qu'on procède à la mise en réaction dans la cuve d'agitation essentiellement sans additif de régulateur.
